Europäisches Patentamt

European Patent Office

Office européen des brevets

(11) Publication number: **0 144 157**
**B1**

(12)

# EUROPEAN PATENT SPECIFICATION

(45) Date of publication of patent specification: **27.07.88**

(51) Int. Cl.⁴: **B 29 C 47/12**

(21) Application number: **84307560.7**

(22) Date of filing: **31.10.84**

(54) Polymer extrusion die lips.

<table>
<tr><td>

(30) Priority: **01.11.83 CA 440180**

(43) Date of publication of application:
**12.06.85 Bulletin 85/24**

(45) Publication of the grant of the patent:
**27.07.88 Bulletin 88/30**

(84) Designated Contracting States:
**BE DE FR GB IT LU NL**

(56) References cited:
**DE-A-2 434 367**
**DE-B-1 187 789**
**FR-A-1 338 715**
**US-A-2 820 252**
**US-A-3 446 884**

</td><td>

(73) Proprietor: **DU PONT CANADA INC.**
**Box 2200 Streetsville Postal Station**
**Mississauga Ontario L5M 2H3 (CA)**

(72) Inventor: **Mollison, Alistair Norman**
**1413 Holly Court**
**Oakville Ontario, L6H 3J4 (CA)**

(74) Representative: **Ellis, John Clifford Holgate et al**
**MEWBURN ELLIS & CO. 2/3 Cursitor Street**
**London EC4A 1BQ (GB)**

</td></tr>
</table>

Courier Press, Leamington Spa, England.

EP 0 144 157 B1

## Description

The present invention relates to apparatus and a method for reducing extrudate roughness of thermoplastic polymeric films, especially films made from linear polyethylene.

The phenomenon of extrudate roughness is discussed by J. P. Todella in Society of Plastics Engineers, Technical Papers Vol. VII, 1956 pp. 285—297. Methods for reducing extrudate roughness, suggested by J. P. Tordella are (i) lowering the viscosity of the molten resin by raising the extrusion temperature or by using a "softer" resin; (ii) using a streamlined or gradually tapered die inlet, (iii) opening up the die gap, or (iv) lowering the throughput of the resin by lowering the pressure. Such methods are not entirely satisfactory, and other methods have been sought to reduce extrudate roughness. In some methods the resin is modified, as disclosed, for example in Canadian Patent 655 293 which issued 1963 January 01 to P. S. Blatz. In other methods the extrusion die is modified, as disclosed, for example, in U.S. Patents 2 820 252 which issued 1958 January 21 to R. B. Koch, and 3 942 937 which issued 1976 March 9 to Prober et al. and in Canadian Patent 1 079 464 which issued 1980 June 17 to Andersen et al.

R. B. Koch in U.S. Patent 2 820 252 discloses an extrusion die suitable for forming elongated shapes e.g. tubing, from synthetic polyamides. It is stated that polytetrafluoroethylene has surface characteristics which are advantageous when employed as an extrusion die, but that polytetrafluoroethylene wears rapidly and irregularly, thereby making polytetrafluoroethylene an unacceptable material for the fabrication of extrusion dies. The problem of rapid and irregular wear was overcome by Koch by forming a die from polytetrafluoroethylene filled with about 5 to 65% by weight of fine silica particles.

U.S. Patent 3 942 937 discloses the manufacture of sequentially extruded multilayered articles such as insulated wires and cable using a die that has been coated with polysiloxane fluid, burnished and heat treated on the die face of the metal from which the die is made.

Canadian Patent 1 079 464 discloses a blown film die in which the surface of the outer die, facing the surface of the inner die, has a higher adhesion to the passing plasticized thermoplastic, material than the surface of the inner die. A coating of polytetrafluoroethylene on the surface of the inner die is disclosed.

It appears from the foregoing patents that it is desirable to apply a "slick" material e.g. polytetrafluoroethylene to one or both die surfaces for reducing extrudate roughness but that some manner must be found for reducing wear, if the method is to be successful commercially.

Applicant has found that when polytetrafluoroethylene resins are applied to film extrusion die surfaces which have been grit-blasted, there is little extrudate roughness exhibited with extruded polyethylene film when the coated die is first used, but the polytetrafluoroethylene wears away quickly, and that such wear leads to increasing extrudate roughness. Blending the polytetrafluoroethylene with small quantities e.g. up to 35% of a "tough" high temperature resistant resin e.g. polyphenylene sulphide resin has proved to be ineffective in eliminating extrudate roughness and/or improving the wear life of the polytetrafluoroethylene.

An extrusion die which greatly reduces extrudate roughness from extruded shapes e.g. films of synthetic thermoplastic polymers and has substantially increased life has now been found.

The present invention provides a polymer extrusion die comprising two spaced apart die lips, each die lip having a surface of a material selected from the group consisting of a) a matrix of a metal or metal alloy impregnated with fluorocarbon polymer and b) a matrix of a ceramic material impregnated with a fluorocarbon polymer.

A preferred metal alloy is a microporous nickel alloy, especially a nickel-cobalt or chrome-nickel alloy, having the fluorocarbon polymer within the micropores.

Another preferred ceramic material is a microporous ceramic material, especially an aluminum oxide ceramic material, having the fluorocarbon polymer within the micropores.

The fluorocarbon polymer within said matrix may be a tetrafluoroethylene (TFE) polymer or an ethylene/hexafluoropropylene (FEP) copolymer.

The surface materials are applied by known methods. Such surface materials are available under the trade marks Nedox, Lectrofluor and SermaSeal, among others.

In the case of Nebox surface material the die lip is electroplated with a hard, porous layer of a nickel-cobalt alloy. The micropores in the electroplated layer are enlarged so that the surface micropores will accept a controlled infusion of TFE polymer. Heat treating of the infused matrix ensures thorough infusion of the TFE polymer and may increase the hardness of the matrix structure.

In the case of SermaSeal surface material, a SermeTel* inorganic bonded ceramic-metallic coating may be used as an adherent base for SermaSeal TFE polymer-impregnated ceramic surface material. For example, the die lips, after degreasing and grit blasting may be sprayed with SermeTel W slurry, which contains acidic chromate/phosphate binder and dispersed aluminum particles. The Sermetel W is then dried and cured, and optionally vapour blasted prior to coating with a SermaSeal surface material e.g. SermaSeal 134 or 657.

At least the inner surfaces of the die lips should be coated with the surfacing material. Although it is not necessary, the surfacing material may also be applied to the surfaces of the polymer flow channels leading to the die lips.

Extrusion of a polymer which is subject to so-

---

* denotes trade mark.

called melt fracture (which manifests itself as extrudate roughness) particularly benefits from use of the die lips of the present invention. In this regard, the present invention is of particular benefit in the manufacture of film made from linear polyethylenes e.g. linear ethylene/$C_4$—$C_{10}$-α-olefin copolymers, or blends of such linear polyethylenes with other compatible polymers e.g. conventional high pressure polyethylene, or ethylene/vinyl acetate copolymers. Especially preferred linear copolymers are ethylene/butene-1 and ethylene/octene-1 copolymers. Preferably the compatible polymer is present in a concentration of up to about 30 parts by weight for every 100 parts by weight of the linear polyethylene. It is preferred that the linear polyethylene has a density of from about 0.913 to 0.965 g/cm$^3$ as determined by ASTM procedure D-1505-68, and especially from 0.915 to 0.940 g/cm$^3$.

The present invention is particularly useful for the manufacture of polyethylene film from linear polyethylenes or blends therewith in a blown film process wherein the die gap between the die lands of the annular die is less than about 1300 μm.

Examples 1 to 3, which follow, show the ineffectiveness of conventional dies and dies coated with certain types of fluorocarbon coatings with respect to reducing extrudate roughness. Examples 1 to 3 do not fall within the scope of the present invention. The remaining examples illustrate the present invention. Density and melt indices of the polymers were measured by ASTM Procedures D-1505-68 and D-1238-79 (condition E), respectively.

Example 1

A conventional 25 mm diameter annular blown-film steel die, having a die gap of 1016 μm was connected to a 19 mm diameter Brabender* extruder. A linear ethylene/butene-1 copolymer having a density of 0.919 g/cm$^3$ and a melt index of 0.75 dg/min was extruded through the die and formed into film, under the following conditions:

| | |
|---|---|
| Die temperature | 230°C |
| Motor current | 4.5 amp |
| Polymer discharge pressure | 8274 kPa |
| Throughput | 1.27 kg/hr |
| Frost line height above die | 5.1 cm |
| Blow up ratio | 2.8:1 |

There was evidence of extrudate roughness, in the form of a rough herringbone pattern, on the film.

Example 2

The die lips of a conventional 25 mm diameter annular blown-film steel die were lightly grit blasted and spray coated with Emralon* 333 polytetrafluoroethylene/resin binder coating. The coating was baked at about 150°C for 10 minutes and then at 305°C for a further 5 minutes. The coated die, having a die gap of 1016 μm was connected to a 19 mm diameter Brabender extruder. The copolymer described in Example 1 was extruded into film form under the same conditions as in Example 1. This die was ineffective in reducing extrudate roughness of the film.

Example 3

Example 2 was repeated except that the die lips were coated with Ryton* polytetrafluoroethylene/polyphenylene sulphide resin. This die, also, was ineffective in reducing extrudate roughness of the film.

Example 4

Nedox microporous chrome-nickel alloy, infused with Teflon tetrafluoroethylene finish, was applied to the die lips of a conventional 25 mm diameter annular blownfilm die. The thus-treated die, having a die gap of 1016 μm was connected to a 19 mm diameter Brabender extruder. The copolymer described in Example 1 was extruded into film form under conditions similar to those employed in Example 1. This die was effective in eliminating extrudate roughness of the film, although some minor die lines were observed.

Example 5

The die lips of two sets of 25 mm diameter annular blown film dies were coated with SermeTel W coating. The die lips of one die set were top-coated with SermaSeal 134 ceramic coating infused with tetrafluoroethylene finish. The die lips of the other die were top-coated with SermaSeal 657 ceramic coating infused with Teflon tetrafluoroethylene finish. Each die set, having die gaps of 1016 μm was connected to a 19 mm diameter Brabender extruder. The copolymer described in Example 1 was extruded into film form, through each die set, under conditions similar to those employed in Example 1. Both die sets were effective in eliminating extrudate roughness of the film.

Although the description and examples refer to spaced apart die lips, the invention may also be used with apparatus embodying a single outlet of circular or other continuous form, such as for coating cables and the like.

Claims

1. A polymer extrusion die comprising two spaced apart die lips, each die lip having a surface of a material selected from the group consisting of a) a matrix of a metal or metal alloy impregnated with a fluorocarbon polymer, and b) a matrix of a ceramic material impregnated with a fluorocarbon polymer.

---

* denotes trade mark.

2. A polymer extrusion die according to Claim 1 wherein the die lips are coated with a matrix of a metal or metal alloy impregnated with a fluorocarbon polymer.

3. A polymer extrusion die according to Claim 1 wherein the die lips are coated with a ceramic material impregnated with a fluorocarbon polymer.

4. A polymer extrusion die according to Claim 2 or Claim 3 wherein the die is an annular blown film extrusion die.

5. A polymer extrusion die according to Claim 2 or Claim 3 wherein the matrix is microporous and the fluorocarbon polymer is a tetrafluoroethylene polymer.

6. A polymer extrusion die according to Claim 2 wherein the matrix is microporous metal alloy and the fluorocarbon polymer is tetrafluoroethylene polymer.

7. A process for reducing extrudate roughness of polyethylene films comprising extruding a linear polyethylene through a film extrusion die having two die lips spaced apart less than about 1300 µm, each die lip having a surface of a material selected from the group consisting of a) a matrix of a metal alloy impregnated with a fluorocarbon polymer, and b) a matrix of a ceramic material impregnated with a fluorocarbon polymer.

8. A process according to Claim 7 wherein the linear polyethylene comprises a linear ethylene/ $C_4$—$C_{10}$ α-olefin copolymer.

9. A process according to Claim 8 wherein the linear polyethylene is an ethylene/butene-1 copolymer or an ethylene/octene-1 copolymer.

10. A process according to Claim 8 or Claim 9 wherein the linear polyethylene is blended with up to about 30 parts by weight of a compatible polymer for every 100 parts by weight of the linear polyethylene.

11. A process according to Claim 8 or Claim 9 wherein the linear polyethylene is blended with up to about 30 parts by weight of a compatible polymer selected from the group consisting of conventional high pressure polyethylene and ethylene/vinyl acetate copolymer.

12. A process according to Claim 7 wherein the linear polyethylene has a density of from about 0.913 to 0.965 g/cm³.

13. A process according to Claim 8 or Claim 12 wherein the linear polyethylene has a density of from 0.915 to 0.940 g/cm³.

## Patentansprüche

1. Extrusionsdüse für Polymere mit zwei im Abstand angeordneten Düsenlippen, wobei jede Düsenlippe eine Oberfläche aus einem Material aufweist, das aus der Gruppe ausgewählt ist, bestehend aus a) einer Matrix aus einem Metall oder einer Metallegierung, die mit einem Fluorcarbonpolymer imprägniert ist, und b) einer Matrix aus einem keramischen Material, das mit einem Fluorcarbonpolymer imprägniert ist.

2. Extrusionsdüse für Polymere nach Anspruch 1, wobei die Düsenlippen mit einer Matrix aus einem Metall oder einer Metalllegierung beschichtet sind, die mit einem Fluorcarbonpolymer imprägniert ist.

3. Extrusionsdüse für Polymere nach Anspruch 1, wobei die Düsenlippen mit einem keramischen Material beschichtet sind, das mit einem Fluorcarbonpolymer imprägniert ist.

4. Extrusionsdüse für Polymere nach Anspruch 2 oder 3, wobei die Düse eine Extrusionsdüse für eine ringförmig geblasene Folie ist.

5. Extrusionsdüse für Polymere nach Anspruch 2 oder 3, wobei die Matrix mikroporös ist und wobei das Fluorocarbonpolymere ein Tetrafluorethylenpolymer ist.

6. Extrusionsdüse für Polymere nach Anspruch 2, wobei die Matrix eine mikroporöse Metallegierung ist und wobei das Fluorcarbonpolymer ein Tetrafluorethylenpolymer ist.

7. Verfahren zur Verringerung der Extrudat-Rauhigkeit von Polyethylenfolien, bei dem ein lineares Polyethylen durch eine Folienextrusionsdüse extrudiert wird, die zwei Düsenlippen mit einem gegenseitigen Abstand von weniger als 1300 µm aufweist, wobei jede Düsenlippe eine Oberfläche aus einem Material aufweist, das aus der Gruppe ausgewählt ist, bestehend aus a) einer Matrix aus einer Metallegierung, die mit einem Fluorcarbonpolymer imprägniert ist, und b) einer Matrix aus einem keramischen Material, das mit einem Fluorcarbonpolymer imprägniert ist.

8. Verfahren nach Anspruch 7, wobei das lineare Polyethylen ein lineares Ethylen/$C_4$—$C_{10}$ α-Olefin Copolymer ist.

9. Verfahren nach Anspruch 8, wobei das lineare Polyethylen eine Ethylen/Buten-1 Copolymer oder ein Ethylen/Octen-1 Copolymer ist.

10. Verfahren nach Anspruch 8 oder 9, wobei das lineare Polyethylen jeweils auf 100 Gewichtsteile des linearen Polyethylens mit bis zu 30 Gewichtsteilen eines kompatiblen Polymers vermischt ist.

11. Verfahren nach Anspruch 8 oder 9, wobei das lineare Polyethylen mit bis zu 30 Gewichtsteilen eines kompatiblen Polymers vermischt ist, das aus der Gruppen ausgewählt ist, bestehend aus herkömmlichem Hochdruckpolyethylen und Ethylen/Vinylazetat Copolymer.

12. Verfahren nach Anspruch 7, wobei das lineare Polyethylen eine Dichte von 0,913 bis 0,965 g/cm³ hat.

13. Verfahren nach Anspruch 8 oder 12, wobei das lineare Polyethylen eine Dichte von 0,915 bis 0,940 g/cm³ hat.

## Revendications

1. Filière d'extrusion de polymères, comprenant deux lèvres de filière espacées, chaque lèvre de filière ayant une surface en une matière choisie dans le groupe constitué de (a) une matrice d'un métal ou d'un alliage métallique imprégnée d'un polymère fluorocarboné, et (b) une matrice d'une matière céramique imprégnée d'un polymère fluorocarboné.

2. Filière d'extrusion de polymères selon la revendication 1, dans laquelle les lèvres de filière sont enduites d'une matrice d'un métal ou d'un alliage métallique imprégnée d'un polymère fluorocarboné.

3. Filière d'extrusion de polymères selon la revendication 1, dans laquelle les lèvres de filière sont enduites d'une matière céramique imprégnée d'un polymère fluorocarboné.

4. Filière d'extrusion de polymères selon la revendication 2 ou la revendication 3, dans laquelle la filière est une filière d'extrusion annulaire pour film soufflé.

5. Filière d'extrusion de polymères selon la revendication 2 ou la revendication 3, dans laquelle la matrice est microporeuse et le polymère fluorocarboné est un polymère de tétrafluoroéthylène.

6. Filière d'extrusion de polymères selon la revendication 2, dans laquelle la matrice est un alliage métallique microporeux et le polymère fluorocarboné est un polymère de tétrafluoroéthylène.

7. Procédé pour réduire la rugosité de films de polyéthylène, comprenant l'extrusion d'un polyéthylène linéaire à travers une filière d'extrusion de film ayant deux lèvres de filière espacées de moins d'environ 1300 micromètres, chaque lèvre de filière ayant une surface d'une matière choisie dans le groupe constitué de (a) une matrice d'un alliage métallique imprégnée d'un polymère fluorocarboné, et (b) une matrice d'une matière céramique imprégnée d'un polymère fluorocarboné.

8. Procédé selon la revendication 7, dans lequel le polyéthylène linéaire comprend un copolymère linéaire éthylène/α-oléfine en $C_4$—$C_{10}$.

9. Procédé selon la revendication 8, dans lequel le polyéthylène linéaire est un copolymère éthylène/butène-1 ou un copolymère éthylène/octène-1.

10. Procédé selon la revendication 8 ou la revendication 9, dans lequel le polyéthylène linéaire est mélangé avec jusqu'à environ 30 parties en poids d'un polymère compatible pour 100 parties en poids du polyéthylène linéaire.

11. Procédé selon la revendication 8 ou la revendication 9, dans lequel le polyéthylène linéaire est mélangé avec jusqu'à environ 30 parties en poids d'un polymère compatible choisi dans le groupe constitué du polyéthylène habituel à pression élevée et du copolymère éthylène/acétate de vinyle.

12. Procédé selon la revendication 7, dans lequel le polyéthylène linéaire présente une masse volumique comprise entre environ 0,913 et 0,965 g/cm³.

13. Procédé selon la revendication 8 ou la revendication 12, dans lequel le polyéthylène linéaire présente une masse volumique comprise entre environ 0,915 et 0,940 g/cm³.